# EUROPÄISCHE PATENTSCHRIFT

(11) **EP 1 461 990 B1**
(45) Veröffentlichungstag und Bekanntmachung des Hinweises auf die Patenterteilung: **16.09.2009**
(21) Anmeldenummer: 04007322.3
(22) Anmeldetag: 26.03.2004
(51) Int. Cl.: A01D 34/82, A01D 34/63

(54) **Lenkbarer motorbetriebener Rasenmäher**
Steerable motor driven lawn mower
Tondeuse à gazon dirigeable et motorisée

(30) Priorität: 26.03.2003 DE 20304862 U
(43) Veröffentlichungstag der Anmeldung: 29.09.2004
(73) Patentinhaber: AL-KO KOBER AG, D-89359 Kötz (DE)
(72) Erfinder: Hauke, Matthias, 67071 Ludwigshafen (DE)
(74) Vertreter: Binder, Armin

(56) Entgegenhaltungen:
- WO-A-00/56137
- DE-A- 2 448 129
- DE-A- 10 137 532
- US-A- 2 731 096
- US-A- 4 881 361

## Beschreibung

Die Erfindung betrifft lenkbaren motorbetriebenen Rasenmäher, mindestens bestehend aus zwei Baugruppen und einem Motor mit Antriebswelle, wobei die Antriebswelle mindestens ein Mähmesser aufweist und die beiden Baugruppen schwenkbar um eine Achse verbunden sind und zum Lenken des Rasenmähers die beiden Baugruppen gegeneinander geschwenkt werden.

Ältere elektro- oder benzinmotorbetriebene Rasenmäher, die meist von Hand schiebbar und/oder ziehbar sind, bestehen zumindest aus einem Rasenmähergehäuse, das den Motor samt Rasenmähermesser beziehungsweise Mäherbalken aufnimmt, drei oder vier Rädern oder Rollen zum leichteren Fortbewegen des Rasenmähers und einer Handdeichsel zum Schieben/Ziehen des Rasenmähers. Die drehbaren Räder oder Rollen sind meist mit Hilfe starrer Drehachsen am Rasenmähergehäuse befestigt. Durch die starren Drehachsen der Räder ist der Geradeauslauf eines solchen Rasenmähers sehr gut, jedoch das Fahren beziehungsweise Lenken des Rasenmähers um Kurven gestaltet sich schwierig. In der Praxis wird meist der gesamte Rasenmäher durch Druck auf die Handdeichsel um zwei Räder einer Radachse geschwenkt, dann wird der geschwenkte Rasenmäher um die beiden am Boden befindlichen Räder in die gewünschte Richtung gedreht, wieder abgesetzt und weiter geschoben beziehungsweise gezogen. Diese Prozedur ist meist sehr kraftaufwendig und umständlich.

Um schlecht zugängliche Bereiche, wie etwa enge Rundungen oder kleinere Buchten, einer Rasenfläche mit dem Mähwerk des Rasenmähers besser erreichen und überfahren zu können, musste die Lenkbarkeit beziehungsweise das Kurvenfahren eines Rasenmähers verbessert werden.

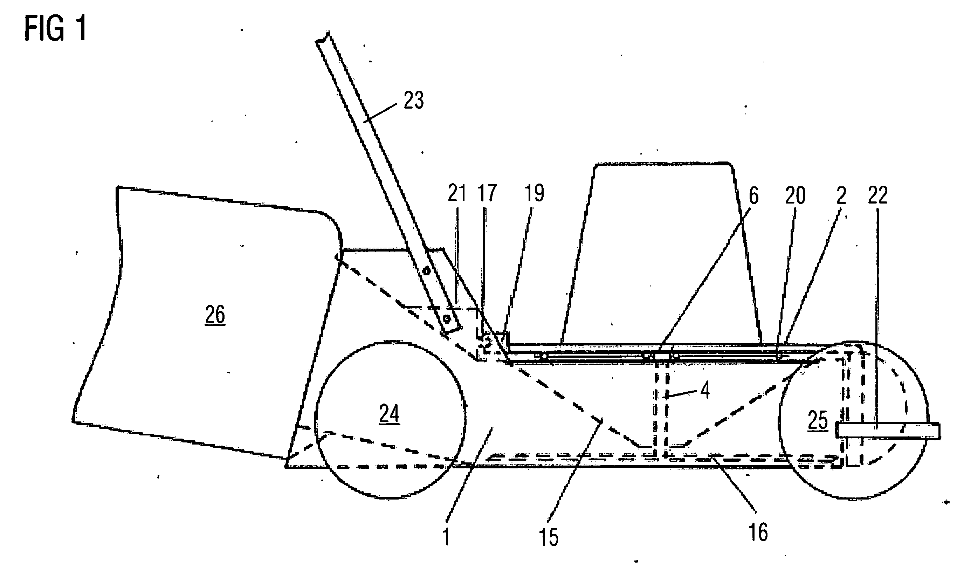

In der US-Patentschrift US 5,653,096 wird ein möglicher Lösungsansatz offenbart, mit dem auch Drehbewegungen mit dem Rasenmäher ohne Anheben des Rasenmähers besser ausgeführt werden sollen. Das Kurvenfahren beziehungsweise Lenken sollte dadurch verbessert werden, dass die Räder auf Radachsen montiert werden, die bezüglich dem Rasenmähergehäuse drehbar ausgeführt sind. In Figur 1 wird in der Draufsicht eine dreirädrige Ausführung eines solchen Rasenmähers gezeigt. Die drei drehbaren Räder 4, 5 und 6 sind auf Achsen befestigt, die unabhängig voneinander senkrecht zur Rasenfläche und am Rasenmähergehäuse drehbar sind. In der Praxis kommt es bei dieser Ausführung häufig vor, dass die Räder nach Durchfahren einer Kurve unterschiedlich stark gedreht wurden und in verschieden Richtungen ausgerichtet sind, wodurch das Anschieben/Ziehen des Rasenmähers nach der durchfahrenen Kurve durch die versetzt stehenden Räder blockiert wurde. Weiterhin wurde der Geradeauslauf durch die einzeln drehbaren Achsen verschlechtert, da zum Beispiel unterschiedlich starke Unebenheiten der Rasenfläche seitlich auf die Räder einwirken und den Rasenmäher aus der Spur zwingen. Aufgrund dieser Nachteile hat sich dieses Konzept nicht durchgesetzt.

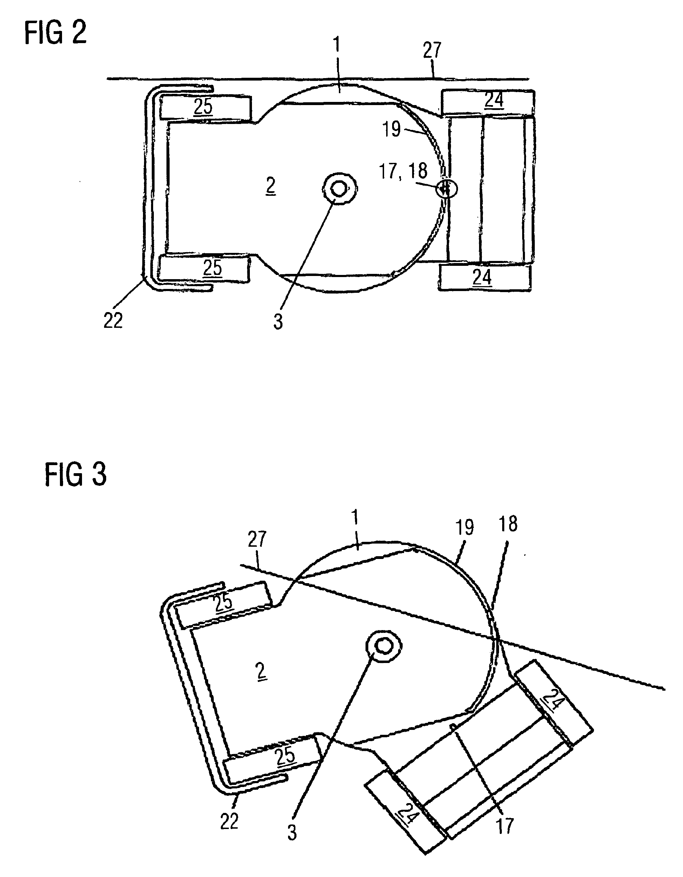

In der PCT-Anmeldung WO 00 56137 wird eine weitere Ausführung eines von Hand schiebbaren/ziehbaren Rasenmähers offenbart, der hinsichtlich der Lenkbarkeit verbessert ausgeführt sein soll. Der in Figur 2 dargestellte vierrädrige Rasenmäher besteht aus einem zweigeteilten Rasenmähergehäuse. Das erste Rasenmähergehäuseteil 1¹ nimmt zwei Räder 2 auf, die mit Hilfe starrer Achsen an diesem Rasenmähergehäuse 1¹ befestigt sind, und zusätzlich den Motor 4 mit Rasenmähermesser 5. Das zweite Rasenmähergehäuseteil 1², welches im wesentlichen aus der Handdeichsel 6 und 11 und den weiteren zwei Rädern 3 besteht, die auf einer gemeinsamen Achse gelagerten sind, ist schwenkbar mit einem Gelenk 7 am Ende des ersten Rasenmähergehäuseteils 1¹ gelagert. Das erste Rasenmähergehäuseteil 1¹ und das zweite 1² Rasenmähergehäuseteil sind bei Krafteinwirkung auf die Handdeichsel 11 gegeneinander verschwenkbar, wodurch der Rasenmäher insgesamt gelenkt werden kann. Problematisch an dieser Ausführung des lenkbaren Rasenmähers ist, dass abhängig von der Handdeichselstellung und der damit verbundenen mehr oder weniger günstigen Lage der Drehachsen zum Teil sehr hohe manuelle Kräfte beim Verschwenken der Rasenmähergehäuseteile und somit beim Lenken des Rasenmähers insgesamt notwendig sind.

Es ist daher Aufgabe der Erfindung, einen lenkbaren Rasenmäher zur Verfügung zu stellen, der mit geringem manuellen Kraftaufwand einfach um Kurven gelenkt werden kann.

Diese Aufgabe der Erfindung wird gegenständlich durch einen lenkbaren Rasenmäher mit den Merkmalen des Patentanspruches 1 gelöst. Vorteilhafte Weiterbildungen der Erfindung sind Gegenstand untergeordneter Patentansprüche.

Der Erfinder hat erkannt, dass der laufende Motor eines Rasenmähers aufgrund der Rotationsenergie bezüglich der Motordrehachse, ähnlich einem Kreisel, stabilisiert wird. Wirken nun bei laufendem Motor Kräfte in einem Winkel zur Rotationsachse auf das Gehäuse des Rasenmähers ein, so sind diese Kräfte sehr hoch, da der Kreisel der einwirkenden Kraft entgegenwirkt (Kreiselpräzision). Die Kräfte, die parallel zur Motordrehachse wirken, sind hierbei wesentlich geringer. Weiterhin hat der Erfinder erkannt, dass der Schwerpunkt eines Rasenmähers nahezu durch die Motordrehachse verläuft. Drehungen eines Gegenstandes, bei denen der Schwerpunkt nahe bei der Drehachse sitzt, sind mit geringerem Drehmomentaufwand zu bewerkstelligen, als Drehungen, bei denen der Schwerpunkt weit außerhalb der Drehachse verläuft.

Aus dieser Erkenntnis heraus hat der Erfinder weiter abgeleitet, dass es für den Kraftaufwand zum Lenken eines lenkbaren Rasenmähers günstig ist, bei einem aus zwei schwenkbaren Baugruppen aufgebauten Rasenmäher, die Schwenkachse und die Motordrehachse konzentrisch anzuordnen.

Entsprechend diesem Erfindungsgedanken schlägt der Erfinder vor, einen lenkbaren motorbetriebenen Rasenmäher, mindestens bestehend aus zwei Baugruppen und einem Motor mit Antriebswelle, wobei die Antriebswelle mindestens ein Mähmesser aufweist und die beiden Baugruppen schwenkbar um eine Achse verbunden sind und zum Lenken des Rasenmähers die beiden Baugruppen gegeneinander geschwenkt werden, dahingehend zu verbessern, dass die Antriebswelle des Motors koaxial zu dieser Achse verläuft.

Hierdurch lässt sich ein leicht lenkbarer motorbetriebener Rasenmäher zur Verfügung stellen, der mit minimalem manuellen Kraftaufwand auch um enge Kurven gelenkt werden kann. Diese vorteilhafte Ausführung eines Rasenmähers eignet sich sowohl bei Rasenmäher mit Benzinmotor oder mit Elektromotor.

Die schwenkbare Verbindung der beiden Baugruppen kann mit einer Hülse realisiert werden, wobei die Motorwelle des Rasenmähermotors innerhalb dieser Hülse verläuft. Innerhalb der Hülse kann die Motorwelle konzentrisch oder versetzt angeordnet verlaufen. Ist der Hülseninnendurchmesser nur geringfügig größer als der Antriebswellendurchmesser, ist eine konzentrische Anordnung von Hülse und Welle vorteilhaft. Innerhalb einer Hülse mit wesentlich größerem Durchmesser als der der Antriebswelle, kann die Antriebswelle auch exzentrisch innerhalb der Hülse angeordnet sein. Bei der exzentrischen Anordnung kann die Drehachse so angeordnet werden, um zum Beispiel Deviationsmomente oder Unwuchten zu verhindern oder zu minimieren. Die Hülse kann je nach Anforderung oder Platzverhältnis beispielsweise als Zylinder oder Hohlkörper mit mehreren gewinkelten Wandungen ausgebildet sein. Durch die Hülsenverbindung wird eine besonders stabile und langlebige Schwenkverbindung zur Verfügung gestellt. Außerdem wird die drehende Motorwelle hierdurch gegen Verschmutzungen, zum Beispiel durch Gras, zusätzlich geschützt.

Eine der beiden Baugruppe kann als Mähergehäuse und die andere Baugruppe als Auflieger ausgebildet sein. Ähnlich einem Zugfahrzeug und einem LKW-Auflieger. Durch die unterschiedliche Ausführung als Auflieger und Mähergehäuse kann eine Gewichtsverteilung der Rasenmäherkomponenten vorgenommen werden, um beispielsweise Drehmomente beim Verschwenken der Baugruppen zu minimieren oder den Schwerpunkt des Rasenmähers günstig zu platzieren.

Die schwenkbare Verbindung der beiden Baugruppe kann durch ein Drehgestell noch stabiler und leichtgängiger ausgeführt sein.

Alternativ oder zusätzlich dazu, kann die Hülse mit dem Auflieger fest verbunden sein. Eine solche Verbindung kann zum Beispiel durch Verschweißen, Schrauben oder Vernieten der Hülse mit dem Auflieger realisiert werden. Hierdurch ergibt sich eine dauerhaft stabile Verbindung der beiden Baugruppen.

Die erste Baugruppe kann das Mähergehäuse, zwei Hinterräder, einen Handgriff zum Schieben und Ziehen des Rasenmähers und vorzugsweise einen Fangkorb aufweisen. Die erste Baugruppe kann mit Hilfe des Handgriffes, der ähnlich einer Deichsel aufgebaut ist, ein Verschwenken gegenüber der zweiten Baugruppe ermöglichen.

Ergänzend dazu kann die zweite Baugruppe dann den Auflieger, zwei Vorderräder, die einen Schutzbügel aufweisen können, und den Motor des Rasenmähers aufweisen. Der Schutzbügel kann beispielsweise ähnlich wie der Kotflügel eines Fahrzeuges ausgeführt sein. Da in dieser Ausführung der Rasenmähermotor mit der zweiten Baugruppe verbunden ist, ist diese Baugruppe in der Regel schwerer als die erste Baugruppe. Hierdurch wird aufgrund der Massenträgheit wiederum ein einfacheres Schwenken der ersten und leichteren Baugruppe um die schwerere zweite Baugruppe begünstigt.

Vorteilhaft ist es, wenn die Vorderräder und/oder die Hinterräder eine Höheneinstellvorrichtung aufweisen. Hierdurch ist eine Einstellung der Schnitthöhe des Grases möglich. Außerdem kann durch Mähen in der maximalen Höheneinstellung der Räder und entsprechendem Abstand des Mähmessers vom Grasansatz auch sehr hoch gewachsenen Gras gemäht werden.
Ist an zumindest einer Baugruppe zumindest ein Abstützelement angeordnet, kann das Kippen des Rasenmähers bei geschwenkten Baugruppen wirksam verhindert werden.

Das Abstützelement kann eine Höheneinstellvorrichtung aufweisen. Durch die Höheneinstellvorrichtung kann das Abstützelement an unterschiedliche Bodenverhältnisse, zum Beispiel gegenüber dem Erdboden aufstehende Pflastersteine, oder die eingestellte Höhe der Vorder- und/oder Hinterräder des Rasenmähers angepasst werden. Die Höheneinstellvorrichtung des Abstützelementes und die Höheneinstellvorrichtung der Vorderräder und/oder der Hinterräder können hinsichtlich der Einstellung miteinander gekoppelt sein.

Ein solches Abstützelement kann als Kufe, Gleiter, Rolle und/oder Rad ausgebildet sein. Beispielsweise bietet eine Kombination einer Kufe mit einem Rad positive Roll- und Gleiteigenschaften. So kann bei glattem Untergrund das rollende Rad und bei unwegsamen und unebenem Untergrund die gleitende Kufe die Abstützfunktion übernehmen.

Vor den Vorderrädern des Rasenmähers kann zumindest ein Rammschutz, vorzugsweise ein Rammbügel, angebracht sein. Dieser Rammbügel kann beispielsweise verhindern, dass beim Auffahren des Rasenmähers auf ein Hindernis die Vorderräder blockieren. Außerdem kann der Rammbügel bewegliche Hindernisse beiseite schieben. Bei feststehenden Hindernissen gleitet der Rasenmäher mit Rammbügel an den Hindernissen vorbei.

Es ist von Vorteil, wenn zwischen den beiden Baugruppen ein lösbarer Arretierungsbolzen angeordnet ist, der in einer Sperrstellung, vorzugsweise beim Geradausfahren des Rasenmähers, eine Schwenkbewegung der Baugruppen verhindert und in einer Offenstellung die Schwenkbewegung der Baugruppen ermöglicht. Hierdurch kann bei arretiertem Bolzen ein sicherer Geradeauslauf des Rasenmähers gewährleistet werden. Nur beim Durchfahren von Kurven und engen Rundungen wird der Arretierungsbolzen gelöst und die beiden Baugruppen durch Schwenken am Handgriff in die gewünschte Lenkrichtung geschwenkt.

Vorteilhaft ist es, wenn mehrere Rastpositionen vorgesehen sind, in die der Arretierungsbolzen einrasten kann, die unterschiedliche Schwenkwinkel zwischen den Baugruppen arretieren. Hierdurch kann der Rasenmäher in unterschiedlich Rastposition verschieden große Kreisdurchmesser abfahren.

Der Arretierungsbolzen kann in der Sperrstellung mittels eines Federelementes, vorzugsweise einer Druckfeder, in eine Bohrung der Rastposition gedrückt werden. Hierdurch wird verhindert, dass vorallem bei unebener Mähfläche der Arretierungsbolzen ungewollt die Schwenkbewegung der beiden Baugruppen frei gibt.

Eine besonders komfortable Ausführung des Sperrmechanismus ergibt sich, wenn der Arretierungsbolzen eine Verbindung über vorzugsweise zumindest einen Seilzug oder ein Gestänge zu einem Hebelelement am Handgriff aufweist, wobei der Arretierungsbolzen mit dem Hebelelement zwischen den zwei Stellungen bewegbar ist. Hierdurch kann die Schwenkbewegung der beiden Baugruppen zum Durchfahren von Kurven durch einfache Hebelbewegung am Handgriff aktiviert werden.

Um Reibungskräfte und somit Drehmomentkräfte beim Schwenken der beiden Baugruppen zu minimieren ist es günstig, wenn die beiden Baugruppen im Schwenkbereich zumindest eine Lagerung, vorzugsweise mindestens ein Kugellager, aufweisen.

Der Drehwiderstand beziehungsweise das Drehmoment zum Verschwenken der beiden Baugruppen kann eingestellt werden, vorzugsweise durch eine Reibkupplung oder eine Reibbremse. Zum Beispiel kann alternativ oder ergänzend zum Arretierungsbolzen bei hoch eingestelltem Widerstand ein unbeabsichtigtes Verschwenken der Baugruppen beim Durchfahren einer Bodenunebenheit vermieden werden.

Es ist günstig, wenn ein Rückstellmechanismus vorgesehen ist, welcher eine Rückstellung der geschwenkten Baugruppen aus einer geschwenkten Position in die Geradauslaufposition der Baugruppen zumindest unterstützt. Die Verschwenkkräfte am Handhebel beziehungsweise an der Deichsel des Rasenmähers können hierdurch für den Bediener angenehm niedrig gehalten werden.

Der Schwenkbereich der beiden Baugruppen sollte im Uhrzeigersinn und gegen den Uhrzeigersinn jeweils um mindestens 15 Grad gegenüber der Geradeauslaufposition des Rasenmähers, vorzugsweise um mindestens 35 Grad, vorzugsweise um mindestens 45 Grad, schwenkbar gelagert sein. Je größer der Schwenkwinkel ist, desto engere Kurven können mit dem Rasenmäher gefahren werden. Ein Schwenkwinkel von 90 Grad oder mehr Graden ist nicht sinnvoll, da aufgrund der versetzten Stellung der Vorderräder gegenüber den Hinterrädern eine Bewegung beziehungsweise Wegrollen, des Rasenmähers blockiert oder zumindest erschwert wird.

Es ist vorteilhaft, wenn zwischen den beiden Baugruppen zumindest ein Kraftübertragungsmittel angeordnet ist, welches die Schwenkbewegung der Baugruppen unterstützt. Ohne Kraftübertragungsmittel wird nur durch Schwenken oder Drehen des Handgriffs, die am Handgriff angeordnete Baugruppe gegenüber der anderen Baugruppe geschwenkt. Durch ein Kraftübertragungsmittel kann diese Schwenkbewegung erleichtert werden.

Eine Ausführung das Kraftübertragungsmittel kann, ähnlich wie beim Arretierungsbolzen, zumindest aus einem Seilzug bestehen, der manuell oder durch Motor bewegt, zumindest teilweise die Schwenkbewegung der Baugruppen ausführt.

Der Rasenmähermotor kann ein Elektromotor sein, der durch das Stromnetz und/oder durch einen Akkumulator gespeist wird. Hierdurch wird ein umweltfreundlicher Rasenmäher zur Verfügung gestellt, der keinerlei Emissionen durch Verbrennungsgase eines Ottomotors emittiert.

Die beiden Baugruppen können kostengünstig aus einem Blech gestanzt werden. Aber auch eine Herstellung aus einem Kunststoff oder einem Druckgusswerkstoff, beispielsweise im Spritzgussverfahren, ermöglicht eine günstige Herstellungsvariante.

Weitere Merkmale der Erfindung ergeben sich aus der nachfolgenden Beschreibung der Ausführungsbeispiele unter Bezugnahme auf die Zeichnungen.

Im Folgenden wird die Erfindung anhand bevorzugter Ausführungsbeispiele mit Hilfe der Figuren näher beschrieben. Es sind nur die für das unmittelbare Verständnis der Erfindung wesentlichen Elemente in den Figuren dargestellt. In den Figuren werden folgende Abkürzungen verwendet: 1: Mähergehäuse/erste Baugruppe; 2: Auflieger/zweite Baugruppe; 3: Hülse; 4: Antriebswelle; 5: O-Ring; 6: Buchse; 7: Lagerkäfig; 8: Kugel 6mm; 9: Kugel 6mm; 10: Druckscheibe; 11: Lagerkäfig; 12: Kugel 6mm; 13: Kontermuttern; 14: Blech zur Materialverstärkung des Mähergehäuses; 15: Schutzhaube; 16: Mähmesser; 17: Arretierungsbolzen; 18: Arretierungsbohrung; 19: Gleitbügel; 20: Drehlager zwischen Mähergehäuse und Auflieger; 21: Verkleidung; 22: Schutzbügel; 23: Handgriff; 24: Hinterrad; 25: Vorderrad; 26: Fangkorb; 27: Linie, die die Geradeausrichtung symbolisiert.

Die Figuren zeigen im Einzelnen:
- Figur 1:: Seitenansicht eines lenkbaren, elektrisch betriebenen Rasenmähers;
- Figur 2:: Draufsicht auf einen lenkbaren Rasenmäher, dessen Baugruppen zur Geradausfahrt ausgerichtet sind;
- Figur 3:: Draufsicht auf einen lenkbaren Rasenmäher, mit geschwenkten Baugruppen zum Durchfahren von Linkskurven;
- Figur 4:: Seitenansicht eines Schnittes durch ein Drehlager.

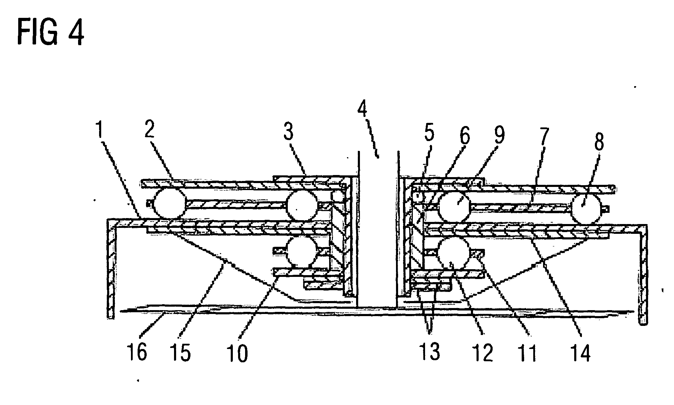

Die **Figur 1** zeigt eine Seitenansicht eines lenkbaren elektrisch betriebenen Rasenmähers. In dieser Ausführung besteht die eine Baugruppe aus dem Mähergehäuse 1 und die zweite Baugruppe aus dem Auflieger 2. Am Mähergehäuse 1 ist der Handgriff 23 zum Schieben und Ziehen des Rasenmähers, die Hinterräder 24 und ein Fangkorb 26 für das Schnittgut befestigt. Am Auflieger 2 sind die Vorderräder 25 montiert, die durch einen Schutzbügel 22 gegen das Blockieren beim Auffahren auf Hindernisse geschützt sind. Der Auflieger 2 und das Mähergehäuse 1 sind um die Achse der Antriebswelle 4, an der das Mähmesser 16 befestigt ist, schwenkbar ausgeführt. Damit das Schwenken des Mähergehäuses 1 um den Auflieger 2 besonders reibungsfrei und ohne hohen Kraftaufwand bewerkstelligt werden kann, ist zwischen Mähergehäuse 1 und dem Auflieger 2 ein besonderes Drehlager 20 angeordnet. Eine Detailansicht durch eine Schnittansicht einer möglichen Ausführung eines Drehlagers 20 wird in Figur 4 dargestellt. Das Drehlager 20 des Rasenmähers wird durch eine Schutzhaube 15 vor Verschmutzungen, zum Beispiel Grasschnitt oder aufgewirbelten Bodenpartikeln, geschützt. Besonders an dieser Ausführung des lenkbaren Rasenmähers ist, dass ein Arretierungsbolzen 17 angebracht ist. Dieser Arretierungsbolzen 17 wird in eine Arretierungsbohrung 18, die sich in einem Gleitbugel 19 befindet, gedrückt. Hierdurch wird das Verschwenken des Mähergehäuses 1 um den Auflieger 2 verhindert. Sowohl die Vorderräder 25 als auch die Hinterräder 24 weisen in die selbe Richtung. Hierdurch wird ein ungestörter Geradeauslauf des Rasenmähers ermöglicht. Zum Durchfahren von Kurven muss der Arretierungsbolzen 17 aus der Arretierungsbohrung 18 entfernt werden. Hierdurch wird ein Verschwenken des Mähergehäuses 1 und des Aufliegers 2 um die Achse der Antriebswelle 4 frei gegeben. Dabei gleitet der Arretierungsbolzen 17 entlang dem Gleitbügel 19. Weisen beim erneuten Geradeausfahren alle Vorderräder 25 und Hinterräder 24 des Rasenmähers wieder in dieselbe Richtung, so rastet der Arretierungsbolzen 17 automatisch wieder in der Arretierungsbohrung 18 am Gleitbügel 19 ein.

Die **Figur 2** zeigt eine Draufsicht auf einen lenkbaren Rasenmäher, dessen Baugruppen zur Geradausfahrt ausgerichtet sind. In dieser Ansicht ist der Antriebsmotor nicht abgebildet. Das Bezugzeichen 27 symbolisiert die gedachte Geradeaus-Fahrtrichtung. Sowohl die Vorderräder 25 des Aufliegers 2 als auch die Hinterräder 24 des Mähergehäuses 1 sind parallel zur Linie 27 ausgerichtet. Um ein ungewolltes Schwenken des Mähergehäuses 1 und des Aufliegers 2 um die Achse der Hülse 3 zu vermeiden, ist ein Arretierungsbolzen 17 in einer Arretierungsbohrung 18 am Gleitbügel 19 eingerastet.

**Figur 3** zeigt den lenkbaren Rasenmäher aus Figur 2. Im Unterschied zu Figur 2 wurde der Arretierungsbolzen 17 aus der Arretierungsbohrung 18 gelöst und das Mähergehäuse 1 als auch der Auflieger 2 bezüglich der Hülse 3 geschwenkt. Der Auflieger 2 und die Vorderräder 25 sind gegenüber dem Mähergehäuse 1 und den Hinterrädern 24 um circa 60 Grad gegen den Uhrzeigersinn geneigt. Hierdurch können relative enge Linkskurven durchfahren werden. Besonders gut ist in dieser Darstellung auch zu erkennen, dass durch den seitlich gegenüber den Rädern 24 und 25 versetzten Mähergehäuse 1 nun auch Rasenbuchten für das Mähmesser besser erreichbar sind.

Die **Figur 4** zeigt in einer Seitenansicht einen Schnitt durch eine mögliche Ausführung eines Drehlagers 20, welches zwischen dem Auflieger 2 und dem Mähergehäuse 1 eingesetzt werden kann. Dieses Drehlager 20 besteht aus einer Hülse 3, dessen oberer Bund mit dem Auflieger 2 verschweißt sein kann. Die Antriebswelle 4 des Rasenmähermotors ragt durch die Hülse 3 hindurch in den Mähraum zum Mähmesser 16. Auf die Hülse 3 ist ein O-Ring 5 und eine Buchse 6 aufgeschoben. Das Drehlager 20 weist einen Lagerkäfig 7, ein äußeres Lager mit zwölf Kugeln 8 und ein inneres Lager mit sechs Kugeln 9 auf. Unterhalb dieser Kugeln 8 und 9 befindet sich das Mähergehäuse 1. Der O-Ring 5 und die Buchse 6 bilden die Distanz zwischen Auflieger 2 und einer Druckscheibe 10 des unteren Lagers. Das untere Drucklager besteht wie das obere aus einem Lagerkäfig 11 und sechs Kugeln 12. Das gesamte Drehlager 20 wird mit zwei Kontermuttern 13 gesichert. Beim Anziehen der Kontermuttern 13 gibt der elastische O-Ring 5 etwas nach, und es kann ein gewisser Druck auf das Lager ausgeübt werden. Zur Materialverstärkung des Mähergehäuses 1 wurde hier ein 3 mm starkes Blech 14 mit dem Mähergehäuse 1 verschweißt. Das Lager wird mit der Schutzhaube 15 vor Verschmutzungen geschützt.

Insgesamt wird also durch die Erfindung, ein lenkbarer Rasenmäher zur Verfügung gestellt, der mit geringem manuellen Kraftaufwand einfach um Kurven gelenkt werden kann. Mit einem solchen Rasenmäher können nun auch radial engere Rasenflächen, zum Beispiel Ein- beziehungsweise Ausbuchtungen der Rasenfläche an nicht ebenen Grenzflächen, vom Mähmesser besser erfasst werden.

Es versteht sich, dass die vorstehend genannten Merkmale der Erfindung nicht nur in der jeweils angegebenen Kombination, sondern auch in anderen Kombinationen oder in Alleinstellung verwendbar sind, ohne den Rahmen der Erfindung zu verlassen.

## Patentansprüche

1. Lenkbarer motorbetriebener Rasenmäher, mindestens bestehend aus zwei Baugruppen (1, 2) und einem Motor mit Antriebswelle (4), wobei die Antriebswelle mindestens ein Mähmesser (16) aufweist und die beiden Baugruppen (1, 2) schwenkbar um eine Achse verbunden sind und zum Lenken des Rasenmähers die beiden Baugruppen (1, 2) gegeneinander geschwenkt werden, **dadurch gekennzeichnet, dass** die Antriebswelle (4) des Motors koaxial zu dieser Achse verläuft.

2. Rasenmäher gemäß dem voranstehenden Patentanspruch 1 oder gemäß dem Oberbegriff des Patentanspruches 1, **dadurch gekennzeichnet, dass** die beiden Baugruppen (1, 2) mit einer Hülse (3) verbunden sind und die Antriebswelle (4) des Motors durch die Hülse (3) verläuft.

3. Rasenmäher gemäß einem der voranstehenden Patentansprüche 1 und 2, **dadurch gekennzeichnet, dass** eine Baugruppe als Mähergehäuse (1) und die andere Baugruppe als Auflieger (2) ausgebildet ist.

4. Rasenmäher gemäß einem der voranstehenden Patentansprüche 1 bis 3, **dadurch gekennzeichnet, dass** die beiden Baugruppen (1, 2) durch ein Drehgestell (20) miteinander schwenkbar verbunden sind.

5. Rasenmäher gemäß einem der voranstehenden Patentansprüche 1 bis 4, **dadurch gekennzeichnet, dass** die Hülse (3) mit dem Auflieger (2) fest verbunden ist, vorzugsweise verschweißt, geschraubt oder genietet.

6. Rasenmäher gemäß einem der voranstehenden Patentansprüche 1 bis 5, **dadurch gekennzeichnet, dass** die erste Baugruppe (1) das Mähergehäuse, zwei Hinterräder (24), einen Handgriff (23) zum Schieben und Ziehen des Rasenmähers und vorzugsweise einen Fangkorb (26) aufweist.

7. Rasenmäher gemäß einem der voranstehenden Patentansprüche 1 bis 6, **dadurch gekennzeichnet, dass** die zweite Baugruppe (2) den Auflieger, zwei Vorderräder (25) und den Motor des Rasenmähers aufweist.

8. Rasenmäher gemäß einem der voranstehenden Patentansprüche 6 und 7, **dadurch gekennzeichnet, dass** die Vorderräder (25) und/oder die Hinterräder (24) eine Höheneinstellvorrichtung aufweisen.

9. Rasenmäher gemäß einem der voranstehenden Patentansprüche 1 bis 8, **dadurch gekennzeichnet, dass** an zumindest einer Baugruppe (1, 2) zumindest ein Abstützelement angeordnet ist, welches bei geschwenkten Baugruppen (1, 2) ein Kippen des Rasenmähers verhindert.

10. Rasenmäher gemäß dem voranstehenden Patentanspruch 9, **dadurch gekennzeichnet, dass** das mindestens eine Abstützelement eine Höheneinstellvorrichtung aufweist.

11. Rasenmäher gemäß einem der voranstehenden Patentansprüche 9 und 10, **dadurch gekennzeichnet, dass** das Abstützelement als Kufe, Gleiter, Rolle und/oder Rad ausgebildet ist.

12. Rasenmäher gemäß einem der voranstehenden Patentansprüche 6 bis 11, **dadurch gekennzeichnet, dass** ein Rammschutz vor den Vorderrädern (25) angeordnet ist.

13. Rasenmäher gemäß einem der voranstehenden Patentansprüche 1 bis 12, **dadurch gekennzeichnet, dass** zwischen den beiden Baugruppen (1, 2) ein lösbarer Arretierungsbolzen (17) angeordnet ist, der in einer Sperrstellung, vorzugsweise beim Geradausfahren des Rasenmähers, eine Schwenkbewegung der Baugruppen (1, 2) verhindert und in einer Offenstellung die Schwenkbewegung der Baugruppen (1, 2) ermöglicht.

14. Rasenmäher gemäß einem der voranstehenden Patentansprüche 1 bis 13, **dadurch gekennzeichnet, dass** mehrere Rastpositionen vorgesehen sind, in die der Arretierungsbolzen (17) einrasten kann, die unterschiedliche Schwenkwinkel zwischen den Baugruppen arretieren.

15. Rasenmäher gemäß einem der voranstehenden Patentansprüche 13 und 14, **dadurch gekennzeichnet, dass** der Arretierungsbolzen (17) in die Rastpositionen mittels eines Federelementes, vorzugsweise einer Druckfeder, gedrückt wird.

16. Rasenmäher gemäß einem der voranstehenden Patentansprüche 13 bis 15, **dadurch gekennzeichnet, dass** der Arretierungsbolzen (17) eine Verbindung, vorzugsweise zumindest einen Seilzug, zu einem Hebelelement am Handgriff (23) aufweist, wobei der Arretierungsbolzen (17) mit dem Hebelelement zwischen der Sperr- und der Offenstellung bewegbar ist.

17. Rasenmäher gemäß einem der voranstehenden Patentansprüche 1 bis 16, **dadurch gekennzeichnet, dass** die beiden Baugruppen (1, 2) im Schwenkbereich zumindest eine Lagerung, vorzugsweise ein Kugellager, aufweisen.

18. Rasenmäher gemäß einem der voranstehenden Patentansprüche 1 bis 17, **dadurch gekennzeichnet, dass** der Drehwiderstand zum Verschwenken der beiden Baugruppen (1, 2), vorzugsweise durch eine Reibkupplung oder eine Reibbremse, einstellbar ist.

19. Rasenmäher gemäß einem der voranstehenden Patentansprüche 1 bis 18, **dadurch gekennzeichnet, dass** ein Rückstellmechanismus vorgesehen ist, welcher eine Rückstellung der geschwenkten Baugruppen (1, 2) aus einer geschwenkten Position in die Geradauslaufposition der Baugruppen (1, 2) zumindest unterstützt.

20. Rasenmäher gemäß einem der voranstehenden Patentansprüche 1 bis 19, **dadurch gekennzeichnet, dass** die beiden Baugruppen (1, 2) im Uhrzeigersinn und gegen den Uhrzeigersinn gegenüber der Geradauslaufposition um mindestens 15 Grad, vorzugsweise um mindestens 35 Grad, vorzugsweise um mindestens 45 Grad, schwenkbar gelagert sind.

21. Rasenmäher gemäß einem der voranstehenden Patentansprüche 1 bis 20, **dadurch gekennzeichnet, dass** zwischen den beiden Baugruppen (1, 2) zumindest ein Kraftübertragungsmittel angeordnet ist, welches die Schwenkbewegung der Baugruppen (1, 2) unterstützt.

22. Rasenmäher gemäß dem voranstehenden Patentanspruch 21, **dadurch gekennzeichnet, dass** das Kraftübertragungsmittel zumindest aus einem Seilzug besteht, der manuell oder durch Motor bewegt, zumindest teilweise die Schwenkbewegung der Baugruppen (1, 2) ausführt.

23. Rasenmäher gemäß einem der voranstehenden Patentansprüche 1 bis 22, **dadurch gekennzeichnet, dass** der Motor des Rasenmähers ein Elektromotor ist, der durch ein Stromnetz und/oder durch einen Akkumulator gespeist wird.

24. Rasenmäher gemäß einem der voranstehenden Patentansprüche 1 bis 23, **dadurch gekennzeichnet, dass** die Baugruppen (1, 2) aus einem Blech und/oder einem Kunststoff und/oder einem Druckgusswerkstoff bestehen.

## Claims

1. Steerable, motor-driven lawnmower, at least comprising two assemblies (1, 2) and a motor with drive shaft (4), wherein the drive shaft has at least one mower-cutter (16) and the two assemblies (1, 2) are connected so as to be pivotable about an axis and, for steering the lawnmower, the two assemblies (1, 2) are pivoted in opposition to one another, **characterized in that** the drive shaft (4) of the motor extends coaxially to said axis.

2. Lawnmower according to preceding Claim 1 or according to the preamble of Claim 1, **characterized in that** the two assemblies (1, 2) are connected to a sleeve (3) and the drive shaft (4) of the motor extends through the sleeve (3).

3. Lawnmower according to one of preceding Claims 1 and 2, **characterized in that** one assembly is in the form of a mower housing (1) and the other assembly is in the form of a trailer (20).

4. Lawnmower according to one of preceding Claims 1 to 3, **characterized in that** the two assemblies (1, 2) are pivotably interconnected by means of a pivot mounting (20).

5. Lawnmower according to one of preceding Claims 1 to 4, **characterized in that** the sleeve (3) is fixedly connected to the trailer (2), preferably welded, screw-connected or riveted.

6. Lawnmower according to one of preceding Claims 1 to 5, **characterized in that** the first assembly (1) includes the mower housing, two rear wheels (24), a handle (23) for pushing and pulling the lawnmower and preferably a collecting box (26).

7. Lawnmower according to one of preceding Claims 1 to 6, **characterized in that** the second assembly (2) includes the trailer, two front wheels (25) and the motor of the lawnmower.

8. Lawnmower according to one of preceding Claims 6 and 7, **characterized in that** the front wheels (25) and/or the rear wheels (24) have a height adjusting device.

9. Lawnmower according to one of preceding Claims 1 to 8, **characterized in that** at least one support element is positioned on at least one assembly (1, 2), said support element preventing the lawnmower tipping over when the assemblies (1, 2) are pivoted.

10. Lawnmower according to preceding Claim 9, **characterized in that** the at least one support element has a height adjusting device.

11. Lawnmower according to one of preceding Claims 9 and 10, **characterized in that** the support element is in the form of runner, slider, roller and/or wheel.

12. Lawnmower according to one of preceding Claims 6 to 11, **characterized in that** a bumper is positioned in front of the front wheels (25).

13. Lawnmower according to one of preceding Claims 1 to 12, **characterized in that** a detachable locking bolt (17) is positioned between the two assemblies (1, 2), said locking bolt, in a locking position, preferably when the lawnmower is moving straight ahead, preventing a pivoting movement of the assemblies (1, 2) and in an open position enabling the pivoting movement of the assemblies (1, 2).

14. Lawnmower according to one of preceding Claims 1 to 13, **characterized in that** there is provided a plurality of locking positions into which the locking bolt (17) can look, said locking positions locking various pivoting angles between the assemblies.

15. Lawnmower according to one of preceding Claims 13 and 14, **characterized in that** the locking bolt (17) is pressed into the locking positions by means of a resilient element, preferably a compression spring.

16. Lawnmower according to one of preceding Claims 13 to 15, **characterized in that** the locking bolt (17) has a connection, preferably at least one cable, to a lever element on the handle (23), wherein the locking bolt (17) is moveable with the lever element between the locking and the open position.

17. Lawnmower according to one of preceding Claims 1 to 16, **characterized in that** the two assemblies (1, 2) have at least one bearing arrangement, preferably a ball bearing, in the pivoting region.

18. Lawnmower according to one of preceding Claims 1 to 17, **characterized in that** the torque resistance for pivoting the two assemblies (1, 2) is adjustable, preferably by means of a friction coupling or a friction brake.

19. Lawnmower according to one of preceding Claims 1 to 18, **characterized in that** a resetting mechanism is provided, which at least supports a resetting of the pivoted assemblies (1, 2) out of a pivoted position into the running-straight-ahead position of the assemblies (1, 2).

20. Lawnmower according to one of preceding Claims 1 to 19, **characterized in that** the two assemblies (1, 2) are mounted so as to be pivotable clockwise and anticlockwise relative to the running-straight-ahead position by at least 15 degrees, preferably by at least 35 degrees, preferably by at least 45 degrees.

21. Lawnmower according to one of preceding Claims 1 to 20, **characterized in that** at least one force transmitting means is positioned between the two assemblies (1, 2), said force transmitting means supporting the pivoting movement of the assemblies (1, 2).

22. Lawnmower according to preceding Claim 21, **characterized in that** the force transmitting means comprises at least one cable, Which, moved manually or by motor, carries out the pivoting movement of the assemblies (1, 2) at least partially.

23. Lawnmower according to one of preceding Claims 1 to 22, **characterized in that** the motor of the lawnmower is an electric motor, which is supplied by mains supply and/or a battery.

24. Lawnmower according to one of preceding Claims 1 to 23, **characterized in that** the assemblies (1, 2) are produced from sheet metal and/or plastics material and/or pressure cast material.

## Revendications

1. Tondeuse à gazon dirigeable et motorisée, constituée au moins de deux modules (1, 2) et d'un moteur avec un arbre d'entraînement (4), l'arbre d'entraînement présentant au moins une lame tondeuse (16) et les deux modules (1, 2) étant connectés de manière à pouvoir pivoter autour d'un axe et étant pivotés l'un par rapport à l'autre pour diriger la tondeuse à gazon, **caractérisée en ce que** l'arbre d'entraînement (4) du moteur s'étend coaxialement à cet axe.

2. Tondeuse à gazon selon la revendication 1 précédente ou selon le préambule de la revendication 1, **caractérisée en ce que** les deux modules (1, 2) sont connectés à une douille (3) et l'arbre d'entraînement (4) du moteur s'étend à travers la douille (3).

3. Tondeuse à gazon selon l'une quelconque des revendications précédentes 1 et 2, **caractérisée en ce qu'**un module est réalisé sous forme de boîtier de tondeuse (1) et l'autre module est réalisé sous forme de remorque (2).

4. Tondeuse à gazon selon l'une quelconque des revendications précédentes 1 à 3, **caractérisée en ce que** les deux modules (1, 2) sont connectés l'un à l'autre de manière pivotante par un bâti tournant (20).

5. Tondeuse à gazon selon l'une quelconque des revendications précédentes 1 à 4, **caractérisée en ce que** la douille (3) est connectée fixement à la remorque (2), de préférence par soudage, vissage ou rivetage.

6. Tondeuse à gazon selon l'une quelconque des revendications précédentes 1 à 5, **caractérisée en ce que** le premier module (1) présente le boîtier de tondeuse, deux roues arrière (24), une poignée (23) pour pousser et tirer la tondeuse à gazon et de préférence un panier de collecte (26).

7. Tondeuse à gazon selon l'une quelconque des revendications précédentes 1 à 6, **caractérisée en ce que** le deuxième module (2) présente la remorque, deux roues avant (25) et le moteur de la tondeuse à gazon.

8. Tondeuse à gazon selon l'une quelconque des revendications précédentes 6 et 7, **caractérisée en ce que** les roues avant (25) et/ou les roues arrière (24) présentant un dispositif d'ajustement en hauteur.

9. Tondeuse à gazon selon l'une quelconque des revendications précédentes 1 à 8, **caractérisée en ce qu'**au moins un élément de support est disposé sur au moins un module (1, 2), lequel empêche un basculement de la tondeuse à gazon lorsque les modules (1, 2) sont pivotés.

10. Tondeuse à gazon selon la revendication précédente 9, **caractérisée en ce que** l'au moins un élément de support présente un dispositif d'ajustement en hauteur.

11. Tondeuse à gazon selon l'une quelconque des revendications précédentes 9 et 10, **caractérisée en ce que** l'élément de support est réalisé sous forme de patin, de coulisseau, de rouleau et/ou de roue.

12. Tondeuse à gazon selon l'une quelconque des revendications précédentes 6 à 11, **caractérisée en ce qu'**une protection contre les chocs est disposée devant les roues avant (25).

13. Tondeuse à gazon selon l'une quelconque des revendications précédentes 1 à 12, **caractérisée en ce que** l'on dispose entre les deux modules (1, 2) un boulon de blocage desserrable (17) qui, dans une position de blocage, de préférence lors de la conduite en ligne droite de la tondeuse à gazon, empêche un mouvement de pivotement des modules (1, 2), et dans une position d'ouverture, permet le mouvement de pivotement des modules (1, 2).

14. Tondeuse à gazon selon l'une quelconque des revendications précédentes 1 à 13, **caractérisée en ce que** plusieurs positions d'encliquetage sont prévues, dans lesquelles le boulon de blocage (17) peut s'encliqueter, et qui bloquent les différents angles de pivotement entre les modules.

15. Tondeuse à gazon selon l'une quelconque des revendications précédentes 13 et 14, **caractérisée en ce que** le boulon de blocage (17) est pressé dans les positions d'encliquetage au moyen d'un élément de ressort, de préférence un ressort de compression.

16. Tondeuse à gazon selon l'une quelconque des revendications précédentes 13 à 15, **caractérisée en ce que** le boulon de blocage (17) présente une connexion, de préférence au moins un câble Bowden, à un élément de levier sur la poignée (23), le boulon de blocage (17) pouvant être déplacé avec l'élément de levier entre la position de blocage et la position d'ouverture.

17. Tondeuse à gazon selon l'une quelconque des revendications précédentes 1 à 16, **caractérisée en ce que** les deux modules (1, 2) présentent, dans la région de pivotement, au moins un support sur palier, de préférence un roulement à billes.

18. Tondeuse à gazon selon l'une quelconque des revendications précédentes 1 à 17, **caractérisée en ce que** la résistance à la rotation pour le pivotement des deux modules (1, 2) peut être ajustée, de préférence par un embrayage à friction ou un frein à friction.

19. Tondeuse à gazon selon l'une quelconque des revendications précédentes 1 à 18, **caractérisée en ce que** l'on prévoit un mécanisme de rappel qui supporte au moins un retour des modules pivotés (1, 2) d'une position pivotée dans la position de conduite en ligne droite des modules (1, 2).

20. Tondeuse à gazon selon l'une quelconque des revendications précédentes 1 à 19, **caractérisée en ce que** les deux modules (1, 2) sont montés de manière à pouvoir pivoter dans le sens des aiguilles d'une montre et dans le sens inverse par rapport à la position de conduite en ligne droite d'au moins 15 degrés, de préférence d'au moins 35 degrés, de préférence d'au moins 45 degrés.

21. Tondeuse à gazon selon l'une quelconque des revendications précédentes 1 à 20, **caractérisée en ce qu'**au moins un moyen de transfert de force est prévu entre les deux modules (1, 2), et supporte le mouvement de pivotement des modules (1, 2).

22. Tondeuse à gazon selon la revendication précédente 21, **caractérisée en ce que** le moyen de transfert de force se compose au moins d'un câble Bowden, qui exécute au moins en partie le mouvement de pivotement des modules (1, 2), de manière manuelle ou entraînée par un moteur.

23. Tondeuse à gazon selon l'une quelconque des revendications précédentes 1 à 22, **caractérisée en ce que** le moteur de la tondeuse à gazon est un moteur électrique qui est alimenté par un réseau électrique et/ou par un accumulateur.

24. Tondeuse à gazon selon l'une quelconque des revendications précédentes 1 à 23, **caractérisée en ce que** les modules (1, 2) se composent d'une tôle et/ou d'un plastique et/ou d'un matériau coulé sous pression.
